# EUROPEAN PATENT APPLICATION

(11) **EP 4 851 787 A1**
(43) Date of publication of application: **09.12.2026**
(21) Application number: 26182332.2
(22) Date of filing: 01.06.2026
(51) Int. Cl.: G06F 8/65, G06F 8/71

(54) **SOFTWARE UPDATES ACROSS VARYING DEFECT-RISK-TOLERANCE SOFTWARE DISTRIBUTION CHANNELS**

(30) Priority: 02.06.2025 US 202519225169
(71) Applicant: Google LLC, Mountain View, CA 94043 (US)
(72) Inventor: KANG, Han, San Jose, 95126 (US); LIGGITT, Jordan Thomas, Mountain View, 94043 (US); KAUR, Simran, Mountain View, 94043 (US); POWELL, Steven Batten, Mountain View, 94043 (US); LIBERATORE, Aaron, Mountain View, 94043 (US); ZHOU, Yuchen, Mountain View, 94043 (US); DRIE, Luke Van, Mountain View, 94043 (US); MACLEOD, Jago, Mountain View, 94043 (US); BONGIOVANNI, Federico, Mountain View, 94043 (US); BERCE, Bogdan Ion, Mountain View, 94043 (US)
(74) Representative: Betten & Resch

(57) **Abstract**

Generally disclosed herein is a system for managing software updates across a plurality of software distribution channels. The system identifies a software version for distribution across one distribution channel of a plurality of software distribution channels, where each software distribution channel is associated with a software defect risk tolerance level. The system obtains time-in-use data for the software version, where the time-in-use data comprises at least one of data indicative of an aggregate time the software version has been used across a plurality of software users and data indicative of a number of calendar days since the software version was released. Based on the time-in-use data, the system determines whether the software version satisfies a time-in-use threshold for each software distribution channel.

## Description

Software distribution across various channels often presents challenges related to managing software defects. Different software distribution channels may have different tolerances for the presence of software defects. For example, a channel used by early adopters might tolerate a higher risk of encountering a software defect compared to a channel intended for a broader user base or critical applications. Existing software distribution practices often rely on release versioning schemes, such as semantic versioning, to indicate the potential scope of changes in an update. Though these reflect the developer risk with the intent of changes, they do not capture the full risk of introducing defects in reasonably complex systems. A new patch version, for instance, may contain seemingly insignificant changes as compared to another, yet have a significantly higher likelihood of undetected defects.

Current approaches to promoting software updates to different channels frequently lack a systematic methodology for assessing the actual stability of a software version before making it available to users within a particular channel. Some systems use the relative distance of a minor version from the newest version as a proxy for risk tolerance. This approach does not account for the actual behavior or defect presence within a specific software version. Furthermore, many existing systems immediately make the latest patch version available as an update target within a channel upon release. This practice means that updates are offered without sufficient data regarding whether the software version has been used extensively enough by a user base to reveal potential defects. Even in channels designated as having low-risk tolerance, software updates can be introduced effectively without knowledge of the defects the new versions might introduce.

### SUMMARY

Generally disclosed herein is a system for managing software updates across a plurality of software distribution channels. The system identifies a plurality of software versions for distribution across a plurality of software distribution channels, where each software distribution channel is associated with a software defect risk tolerance level. The system obtains time-in-use data for a first software version, where the time-in-use data comprises at least one of data indicative of an aggregate time the first software version has been used across a plurality of software users and data indicative of a number of calendar days since the first software version was released. Based on the time-in-use data, the system determines whether the first software version satisfies a time-in-use threshold for a first software distribution channel, the time-in-use threshold associated with the software defect risk tolerance level of the first software distribution channel. If the first software version satisfies the time-in-use threshold, the system makes the first software version eligible for promotion to the first software distribution channel.

An aspect of the disclosure provides a system for managing software updates across a plurality of software distribution channels. The system may comprise a processor, and a memory communicatively coupled to the processor, the memory storing instructions executable by the processor to perform operations. The operations may comprise identifying a software version for distribution across a first software distribution channel of a plurality of software distribution channels, wherein each software distribution channel is associated with a software defect risk tolerance level; obtaining time-in-use data for the software version, wherein the time-in-use data comprises at least one of data indicative of an aggregate time the software version has been used across a plurality of software users or data indicative of a number of calendar days since the software version was released; based on the time-in-use data, determining whether the software version satisfies a time-in-use threshold for a first software distribution channel, the time-in-use threshold associated with the software defect risk tolerance level of the first software distribution channel; and in response to determining that the software version satisfies the time-in-use threshold, promoting the software version to be eligible for the first software distribution channel.

In some examples, the operations may further comprise, after determining whether the software version satisfies the time-in-use threshold for the first software distribution channel, determining whether the software version satisfies a time-in-use threshold for a second software distribution channel different from the first software distribution channel.

In some examples, the operations may further comprise, in response to determining that the software version satisfies the time-in-use threshold associated with the first software distribution channel, determining whether the time-in-use data for the software version satisfies a time-in-use threshold associated with the second software distribution channel.

In some examples, the operations may further comprise, in response to determining that the time-in-use data for the software version satisfies the time-in-use threshold associated with the second software distribution channel, promoting the software version to be eligible for the second software distribution channel.

In some examples, the time-in-use threshold may comprise a threshold for the number of calendar days since the software version was released.

In some examples, the time-in-use threshold may comprise a threshold for the aggregate time the software version has been used across the plurality of software users.

In some examples, the operations may further comprise identifying one or more detected defects associated with the software version; and further determining whether the software version is eligible for promotion to the software distribution channel based on the one or more detected defects.

In some examples, determining whether the software version satisfies the time-in-use threshold may comprise comparing the time-in-use data to a plurality of time-in-use thresholds associated with different release stages within the first software distribution channel.

In some examples, the time-in-use threshold for a first release stage may be different from the time-in-use threshold for a second release stage within the first software distribution channel.

In some examples, the plurality of software versions may be versioned according to a semantic versioning scheme comprising major versions, minor versions, and patch versions.

In some examples, determining whether the software version is eligible for promotion to the first software distribution channel comprises applying different time-in use thresholds based on whether the promotion is a patch version promotion within a minor version or a minor version promotion to a new minor version.

Another aspect of the disclosure provides a method for managing software updates across a plurality of software distribution channels, the method comprising: identifying, by one or more processors, a software version for distribution across a first software distribution channel of a plurality of software distribution channels, wherein each software distribution channel is associated with a software defect risk tolerance level; obtaining, by the one or more processors, time-in-use data for the software version, wherein the time-in-use data comprises at least one of data indicative of an aggregate time the software version has been used across a plurality of software users and data indicative of a number of calendar days since the software version was released; based on the time-in-use data, determining, by the one or more processors, whether the software version satisfies a time-in-use threshold for a first software distribution channel, the time-in-use threshold associated with the software defect risk tolerance level of the first software distribution channel; and in response to determining that the software version satisfies the time-in-use threshold, promoting, by the one or more processors, the software version eligible for the first software distribution channel.

In some examples, the method may further comprise after determining whether the software version satisfies the time-in-use threshold for the first software distribution channel, determining, by the one or more processors, whether the software version satisfies a time-in-use threshold for a second software distribution channel different from the first software distribution channel.

In some examples, the method may further comprise, in response to determining that the software version satisfies the time-in-use threshold associated with the first software distribution channel, determining, by the one or more processors, whether the time-in-use data for the software version satisfies a time-in-use threshold associated with the second software distribution channel.

In some examples, the method may further comprise, in response to determining that the time-in-use data for the software version satisfies the time-in-use threshold associated with the second software distribution channel, promoting, by the one or more processors, the software version to be eligible for the second software distribution channel.

In some examples, the time-in-use threshold may comprise a threshold for the number of calendar days since the software version was released.

In some examples, the time-in-use threshold may comprise a threshold for the aggregate time the software version has been used across the plurality of software users.

In some examples, the method may further comprise identifying, by the one or more processors, one or more detected defects associated with the software version, and determining whether the software version is eligible for promotion to the first software distribution channel based on the one or more defects detected.

In some examples, determining, by the one or more processors, whether the software version satisfies the time-in-use threshold may comprise comparing, by the one or more processors, the time-in-use data to a plurality of time-in-use thresholds associated with different release stages within the first software distribution channel.

Yet another aspect of the disclosure provides a non-transitory computer-readable medium comprising instructions that, when executed by one or more processors, cause the one or more processors to perform operations for managing software updates across a plurality of software distribution channels. The operations may comprise: identifying a software version for distribution across a first software distribution channel of a plurality of software distribution channels, wherein each software distribution channel is associated with a software defect risk tolerance level; obtaining time-in-use data for the software version, wherein the time-in-use data comprises at least one of data indicative of an aggregate time the software version has been used across a plurality of software users and data indicative of a number of calendar days since the software version was released; based on the time-in-use data, determining whether the software version satisfies a time-in-use threshold for a first software distribution channel, the time-in-use threshold associated with the software defect risk tolerance level of the first software distribution channel; and in response to determining that the software version satisfies the time-in-use threshold, promoting the software version to be eligible for the first software distribution channel.

### BRIEF DESCRIPTION OF THE DRAWINGS

FIG. 1 is a schematic representation of an example system for managing software rollout in accordance with aspects of the disclosure.
FIG. 2 is an example rollout management controller in accordance with aspects of the disclosure.
FIG. 3 is an example software rollout management system in accordance with aspects of the disclosure.
FIG. 4 is an example flow diagram of various stages of software rollout management process in accordance with aspects of the disclosure.
FIG. 5 is an example flow diagram of a method for software update promotion in accordance with aspects of the disclosure.

### DETAILED DESCRIPTION

The present disclosure relates to a system and method for managing software versions for deployment. Disclosed is a system that selects and manages software versions by applying a set of algorithmic rules. The system automatically determines which software versions are suitable for deployment and upgrading across different environments, aiming to increase the reliability and testability of the version selection process.

The system may be configured to manage software updates across different software distribution channels, each having varying tolerances for software defects. Such software distribution channels may include rapid, regular, and stable channels. The system may be configured to obtain time-in-use data for a particular software version. This time-in-use data comprises either the total aggregate time that the software version has been used by a multitude of software users or the total number of calendar days that have elapsed since the software version was initially released. Based on the time-in-use data, the system may be configured to evaluate whether the software version satisfies a predefined time-in-use threshold specifically designated for a particular software distribution channel. The system may be configured to predetermine the time-in-use threshold for each type of software distribution channel based on the associated defect risk tolerance level.

The plurality of software versions can be versioned according to a semantic versioning scheme comprising patch versions and minor versions. Determining whether the first software version is eligible for promotion to the first software distribution channel can comprise applying different time-in-use thresholds based on whether the promotion is a patch version promotion within a minor version or a minor version promotion to a new minor version.

For example, the risk tolerance level is higher for the rapid channel than for the stable channel. Suppose the software version successfully meets or exceeds the corresponding time-in-use threshold. In that case, the system may be configured to designate the software version as eligible for promotion and availability for rollout within that specific software distribution channel. The system may also be configured to apply different time-in-use thresholds based on whether the promotion involves a new patch version within an existing minor version or a transition to a completely new minor version.

The system may be configured to determine any detected software defects that are associated with the software version. The system can be further configured to identify one or more detected defects associated with the first software version and further determine whether the first software version is eligible for promotion to the first software distribution channel based on the one or more detected defects.

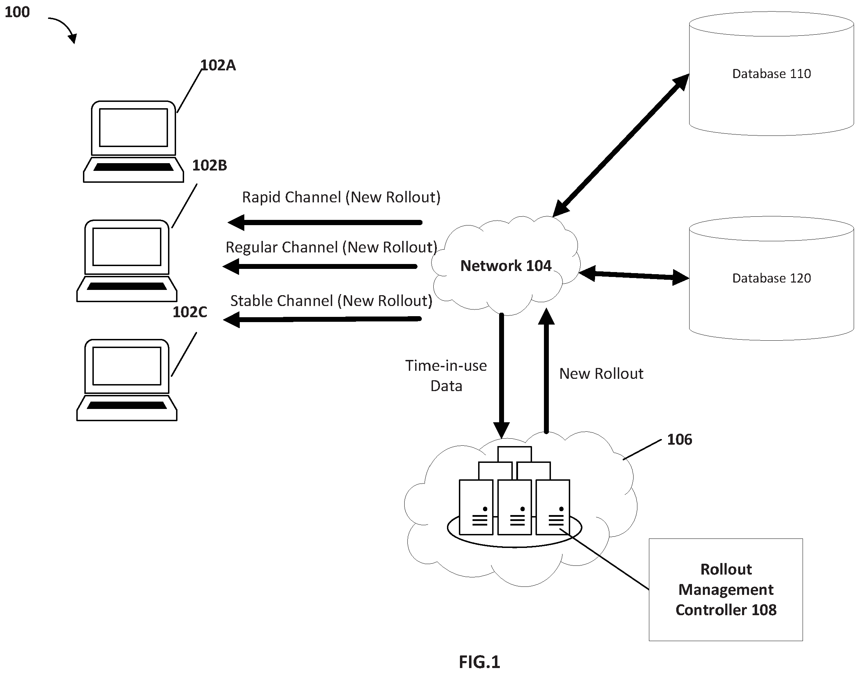

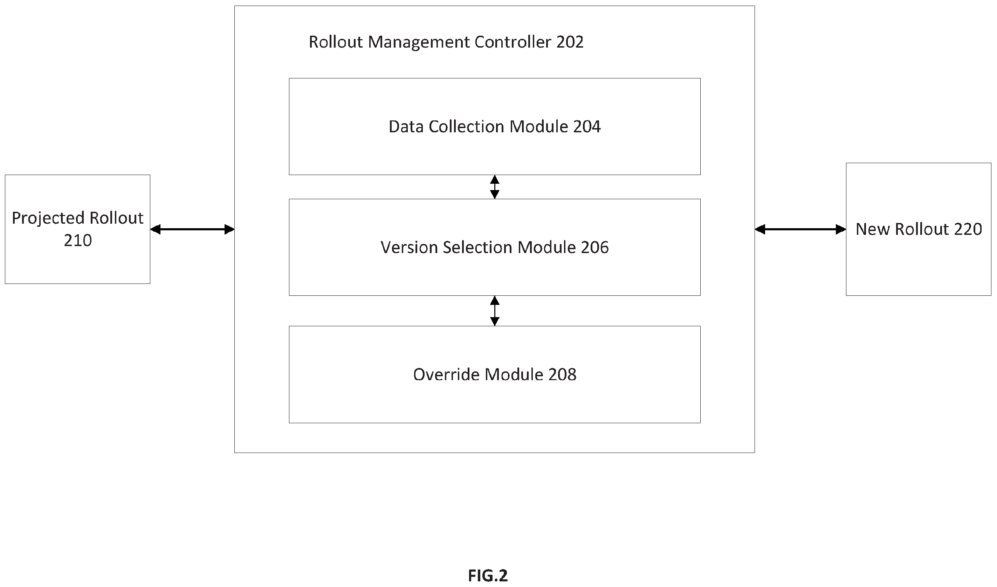

FIG. 1 is a schematic representation of an example software rollout management system 100. Software rollout management system 100 may include client devices 102A-C and a cloud environment 106. Client device 102 may be connected to cloud environment 106 via network 104. Cloud environment 106 may include one or more computers or a distributed system including one or more data processing hardware and/or storage devices, such as rollout management controller 108. Rollout management controller 108, such as rollout management controller 202 as depicted in FIG.2, may be located in the infrastructure (e.g., data processing hardware and/or memory hardware) of cloud environment 106. Cloud environment 106 may receive time-in-use data from database 110 or database 120. Cloud environment 106 may be configured to transmit a software update to client devices 102A-C via network 104 using one of the three channels (e.g. rapid, regular, or stable channels). Each distribution channel may be linked to a specific software defect risk tolerance level. For example, the rapid channel typically has a higher tolerance for defects than the stable channel, as its users are more accepting of potential issues in exchange for early access to new features. The software update may be released after the rollout management controller 108 determines a software update release. The rollout management controller 108 may be configured to analyze the time-in-use data and known defect information and identify a candidate software version suitable for rollout. The rollout management controller 108 may be configured to select available software versions, the default version, and upgrade targets based on the comparison of the time-in-use date, semantic requirement, and known issues.

User devices 102A-C may include any computing device, such as a computer, a tablet, a laptop, etc. If user device 102 encounters a problem while running a computer program or an application programming interface (API), user devices 102A-C may transmit information of the current semantic versions of the software and receive a download of a software upgrade from cloud environment 106. Cloud environment 106 may be configured to store old software versions in database 110 or database 120 Cloud environment 106 may store known defect information of current or past software versions in database 110.

FIG. 2 is a block diagram of an example rollout management controller 202. Rollout management controller 202 may be implemented in cloud environment 106. Rollout management controller 202 can take on a variety of configurations, such as, for example, a controller or microcontroller, or a processor, such as a CPU, a GPU, or an ASIC, including a tensor processing unit (TPU). Rollout management controller 202 may include components such as a processor, memory including data, and instructions to execute various modules. Rollout management controller 202 may include other components present in server computing devices.

Rollout management controller 202 may include data collection module 204, version selection module 206, and override module 208. Data collection module 204 may be configured to collect time-in-use information and known issue information for software versions. Version selection module 206 may be configured to apply rules and policies based on this information to identify a subset of versions suitable for deployment to client devices. The rules and policies include specific criteria for selecting available versions, default versions, and upgrade targets based on comparisons of the time-in-use requirements, semantic versioning, and known defect information. Override module 208 may be configured to allow users to manually adjust the software upgrade to the identified subset of the software version.

Data collection module 204 may be configured to receive projected rollout 210. Projected rollout 210 may include information regarding software and its version information, along with known defect information and time-in-use information. This time-in-use data comprises either the total aggregate time that the software version has been used by a multitude of software users or the total number of calendar days that have elapsed since the software version was initially released. Data collection module 204 may be configured to determine any detected software defects that are associated with the software version.

Version selection module 206 may be configured to determine whether the timme0in-ues information of each projected rollout 210 exceeds the corresponding time-in-use threshold. If the time-in-use information exceeds the thresholds, version selection module 206 may be configured to designate the software version as eligible for promotion and availability for rollout within that specific software distribution channel. Version selection module 206 may also be configured to apply different time-in-use thresholds based on whether the promotion involves a new patch version within an existing minor version or a transition to a completely new minor version. Version selection module 206 may further be configured to determine whether the first software version is eligible for promotion to the first software distribution channel based on one or more detected defects. After version selection module 206 determines which software version is eligible, rollout management controller 202 may release a new rollout 220 to the client devices. New rollout 220 may be determined to have particular defects in later use and may be reanalyzed and redetermined by rollout management controller 202 for a fallback candidate.

Override module 208 may be configured to allow users to manually exclude, override, or select particular versions or override for particular distribution channels, such as rapid, regular, and stable channels.

It is to be appreciated that in this example, data collection module 204, version selection module 206, and override module 208 are shown as part of rollout management controller 202. In other examples, data collection module 204, version selection module 206, and override module 208 may be implemented in one or more other systems or computing devices.

According to some examples, rollout management controller 202 may utilize machine learning models (not shown) trained to predict whether a certain software version satisfies predetermined rules or policies to be a candidate software version for a rollout according to the disclosure described herein. Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some machine-learned models can include multi-headed self-attention models (e.g., transformer models).

The model(s) can be trained using various training or learning techniques. The training can implement supervised learning, unsupervised learning, reinforcement learning, etc. The training can use techniques such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations. A number of generalization techniques (e.g., weight decays, dropouts) can be used to improve the generalization capability of the models being trained.

The model(s) can be pre-trained before domain-specific alignment. For instance, a model can be pretrained over a general corpus of training data and fine-tuned on a more targeted corpus of training data. A model can be aligned using prompts that are designed to elicit domain-specific outputs. Prompts can be designed to include learned prompt values (e.g., soft prompts). The trained model(s) may be validated prior to their use using input data other than the training data and may be further updated or refined during their use based on additional feedback/inputs.

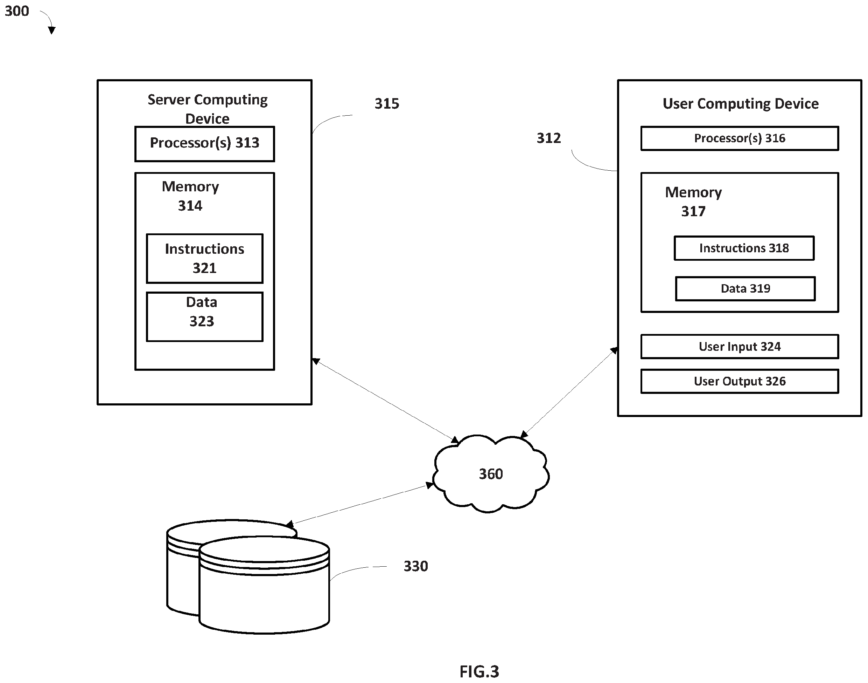

FIG. 3 depicts a software rollout management system. User computing device 312 may include a graphical user interface and software that displays the status of the software agent, or the status of the issues reported by a user. Server computing device 315 may be a component of rollout management controller 202 illustrated in FIG.2. Server computing device 315 may be configured to manage the deployment and configuration of the software rollout based on predefined rules or policies.

User computing device 312 and the server computing device 315 can be communicatively coupled to one or more storage devices 330 over a network 360. The storage device(s) 330 can be a combination of volatile and non-volatile memory and can be at the same or different physical locations than the computing devices 312, 315. For example, the storage device(s) 330 can include any type of non-transitory computer-readable medium capable of storing information, such as a hard drive, solid-state drive, tape drive, optical storage, memory card, ROM, RAM, DVD, CD-ROM, write-capable, and read-only memories.

The server computing device 315 can include one or more processors 313 and memory 314. Memory 314 can store information accessible by the processor(s) 313, including instructions 321 that can be executed by the processor(s) 313. Memory 314 can also include data 323 that can be retrieved, manipulated, or stored by the processor(s) 313. Memory 314 can be a type of non-transitory computer-readable medium capable of storing information accessible by the processor(s) 313, such as volatile and non-volatile memory. The processor(s) 313 can include one or more central processing units (CPUs), graphic processing units (GPUs), field-programmable gate arrays (FPGAs), and/or application-specific integrated circuits (ASICs), such as tensor processing units (TPUs).

Instructions 321 can include one or more instructions that when executed by the processor(s) 313, cause the one or more processors to perform actions defined by the instructions. Instructions 321 can be stored in object code format for direct processing by the processor(s) 313, or in other formats including interpretable scripts or collections of independent source code modules that are interpreted on demand or compiled in advance. Instructions 321 can include instructions for implementing processes consistent with aspects of this disclosure. Such processes can be executed using the processor(s) 313, and/or using other processors remotely located from the server computing device 315.

Data 323 can be retrieved, stored, or modified by the processor(s) 313 in accordance with instructions 321. Data 323 can be stored in computer registers, in a relational or non-relational database as a table having a plurality of different fields and records, or as JSON, YAML, proto, or XML documents. Data 323 can also be formatted in a computer-readable format such as, but not limited to, binary values, ASCII, or Unicode. Moreover, data 323 can include sufficient information to identify relevant information, such as numbers, descriptive text, proprietary codes, pointers, references to data stored in other memories, including other network locations, or information that is used by a function to calculate relevant data.

User computing device 312 can also be configured similar to the server computing device 315, with one or more processors 316, memory 317, instructions 318, and data 319. The user computing device 312 can also include a user output 326, and a user input 324. The user input 324 can include any appropriate mechanism or technique for receiving input from a user, such as a keyboard, mouse, mechanical actuators, soft actuators, touchscreens, microphones, and sensors.

Server computing device 315 can be configured to transmit data to the user computing device 312, and the user computing device 312 can be configured to display at least a portion of the received data on a display implemented as part of the user output 326. The user output 326 can also be used for displaying an interface between the user computing device 312 and the server computing device 315. The user output 326 can alternatively or additionally include one or more speakers, transducers, or other audio outputs, a haptic interface, or other tactile feedback that provides non-visual and non-audible information to the platform user of the user computing device 312.

Although FIG. 3 illustrates the processors 313, 316 and the memories 314, 317 as being within the computing devices 315, 312, components described in this specification including the processors 313, 316 and the memories 314, 317 can include multiple processors and memories that can operate in different physical locations and not within the same computing device. For example, some of the instructions 321, 318 and the data 323, 319 can be stored on a removable SD card and others within a read-only computer chip. Some or all of the instructions and data can be stored in a location physically remote from, yet still accessible by, the processors 313, 316. Similarly, processors 313, 316 can include a collection of processors that can perform concurrent and/or sequential operations. Computing devices 315, 312 can each include one or more internal clocks providing timing information, which can be used for time measurement for operations and programs run by computing devices 315, 312.

The server computing device 315 can be configured to receive requests to process data from the user computing device 312. For example, environment 300 can be part of a computing platform configured to provide a variety of services to users, through various user interfaces and/or APIs exposing the platform services. One or more services may include automatically generating updates for software agents in a containerized environment.

Computing devices 312, 315 can be capable of direct and indirect communication over network 360. Computing devices 312, 315 can set up listening sockets that may accept an initiating connection for sending and receiving information. The network 360 itself can include various configurations and protocols including the Internet, World Wide Web, intranets, virtual private networks, wide area networks, local networks, and private networks using communication protocols proprietary to one or more companies. Network 360 can support a variety of short- and long-range connections. The network 360, in addition, or alternatively, can also support wired connections between computing devices 312, 315, including over various types of Ethernet connections.

Although a single server computing device 315 and user computing device 312 are shown in FIG. 3, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

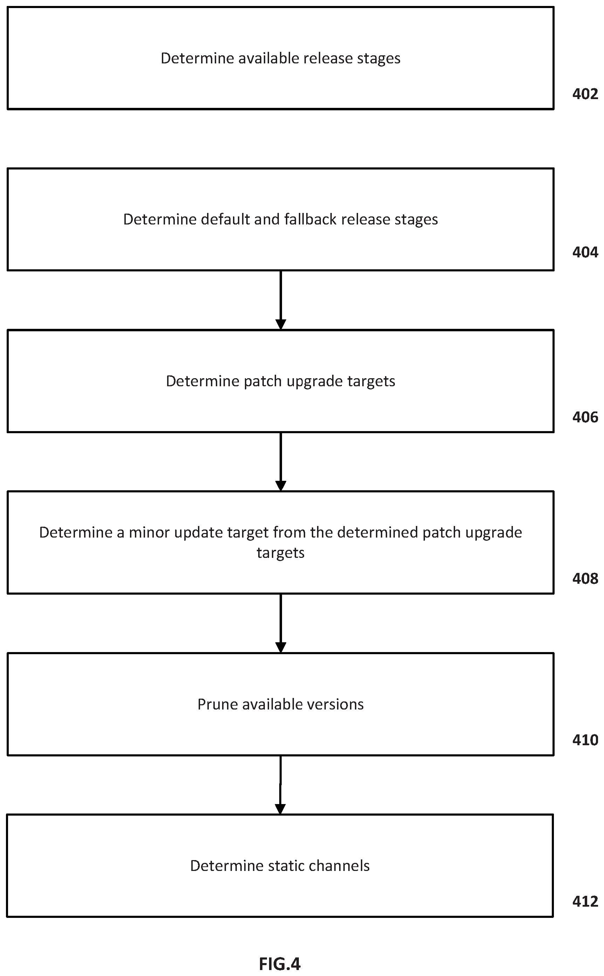

FIG. 4 is a flow diagram of various stages of a software rollout management process. At block 402, the rollout management system ("system") such as rollout management system 100 as depicted in FIG.1, is configured to determine available release stages for software. The system is configured to identify all software versions that meet the time-in-use requirements for the available release for a particular channel of three channels (e.g., rapid, regular or stable channels) as potential candidates. Within each minor version, candidates are selected only if they are newer than the currently latest available version and do not introduce any new known issues compared to that latest version. If a candidate belongs to a new minor version not currently present in the available versions, the system can be configured to compare it against the latest available version of the preceding minor version. Manual overrides can be applied in this stage to explicitly include or exclude specific versions. The resulting list can comprise all candidate versions meeting the above criteria, although it may be subject to later pruning. A limitation may exist where only available versions from one new minor version may be allowed at this stage.

At block 404, the system is configured to determine default and fallback release stages. The system is configured to determine a primary recommended version for a default release and a fallback option. Candidates for the default version should fulfill the time-in-use requirements for the default release and should satisfy the criteria at block 402. The default version can only advance by one minor version. If a candidate is within the same minor version as the current default version, the candidate must be newer. If the candidate is in a subsequent minor, it must be newer than the patch upgrade target in that minor and should meet the minor version's time-in-use requirements for the default release. The selected candidate for the default release should also not introduce any new known defect information compared to the current default version. If multiple candidates satisfy these requirements, the version with the fewest known defects and the newest semantic version is chosen, thereby prioritizing the number of known issues. A manual override can dictate the default version for a channel. The fallback version is determined based on whether the default version was updated. If the default version has been updated, the previous default version becomes the new fallback version.

At block 406, the system is configured to determine patch upgrade targets. The system is configured to identify versions suitable as targets for patch upgrades. All versions qualifying from block 402 may be considered. For each minor version, a candidate is selected if it is newer than the current patch target in the same minor version. If no existing patch upgrade target exists in a particular minor version, the lowest available version in the same minor version may be used for comparison. The selected candidate in the same minor version as the default version should be older than or equal to the default version. Candidates should also meet the time-in-use requirements for the patch upgrade target, although current patch upgrade targets can be selected even if they do not meet the above requirements. The selected candidate for every minor version should not introduce any new known defects compared to the current patch target in the same minor version. If no existing patch upgrade target exists, the lowest available version in that minor version can be used for comparison. If multiple candidates satisfy these criteria for a minor version, the version with the fewest known defects and the newest semantic version is selected as the new patch upgrade target for that minor version, prioritizing the number of known defects. Manual overrides can specify a patch upgrade target version for any minor version in a channel.

At block 408, the system is configured to determine a minor update target from the determined patch upgrade targets. The system is configured to select a target version for minor version upgrades based on the patch upgrade targets identified at block 406. The minor upgrade target can remain in the same minor version or advance by one minor version. If advancing to a higher minor version, the new patch target in that minor version may be selected, or the new patch upgrade target in the same minor version can alternatively be chosen. Advancement to a higher minor version occurs only if the next minor version has met aggregated minor time-in-use requirements and has no more known defects than the patch upgrade target in the current minor version. A manual override can specify a patch upgrade target version for the selected minor version.

At block 410, the system is configured to prune available software versions. The system is configured to reduce the list of available versions identified at block 402 to a manageable size. The objective of the pruning is to retain essential versions. The default version and patch upgrade targets selected at block 404 and block 406 are always retained. The most widely used version (excluding upgrade patch targets) that is potentially eligible for promotion (to channel default, channel patch target, or next channel available) can also be retained. Furthermore, the newest version within each identified known defects cluster is preserved. Known defect clustering involves grouping versions based on shared known defects to ensure that versions that fix existing defects, even if they introduce new defects, remain available, particularly if they are the only versions containing such fixes. If a known defect cluster is a strict superset of another known defect, the known defect cluster is dropped. The remaining clusters represent groups of versions that are better in some way than at least one other cluster. For each remaining cluster, the semantically newest version is retained.

At block 412, the system is configured to determine static channels. The system is configured to compute the versions for a static channel. Static channels are different from other channels in that the static channel does not have a single available versions list but rather aggregates versions from other channels. A special list can be generated for append-only and includes all current software versions along with available versions from the rapid (excluding stable and regular channels. According to some examples, a preview version can be determined. Preview versions comprise rapid-only available versions and the rapid fallback version. A valid master version can be determined. Valid master versions can include available versions from the rapid, stable, and regular channels. The default version and fallback version for the static channel are the same as those in the regular channel. The minor upgrade target may be the same as the upgrade target in the stable channel. Patch upgrade versions for the minor version matching the stable upgrade target are the same as the upgrade target in the table channel. For all other minor versions, these minor versions may mirror the patch upgrade targets in the regular channel.

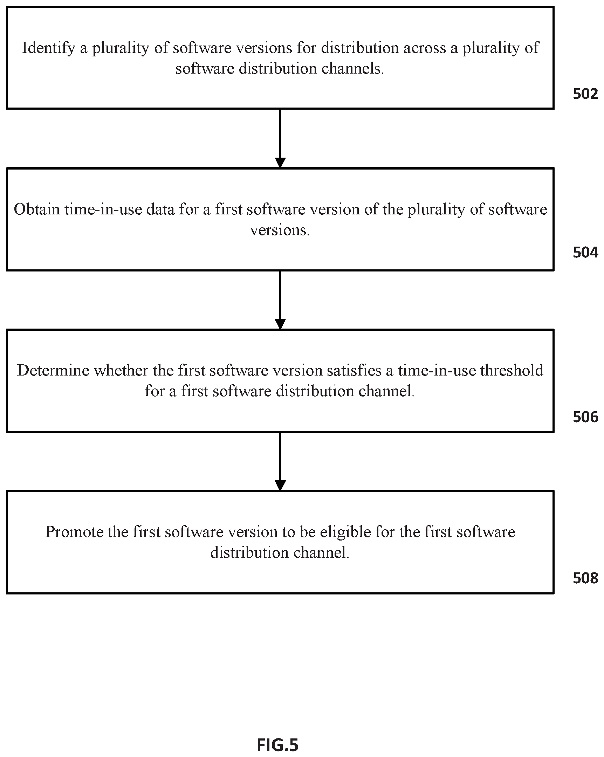

FIG. 5 illustrates an example flow diagram of a method for software update promotion 500. According to block 502, a controller, such as rollout management controller 202 ("controller"), is configured to identify a plurality of software versions for distribution across a plurality of software distribution channels. Each software distribution channel is associated with a software defect risk tolerance level. Software distribution channels include rapid, regular and stable channels.

According to block 504, the controller is configured to obtain time-in-use data for a first software version of the plurality of software versions. The time-in-use data includes at least one of the data indicators of an aggregate time the first software version has been used across a plurality of software users and/or data indicative of a number of calendar days since the first software version was released. The time-in-use data implies how widely and how long different users have used a particular software version.

According to block 506, the controller is configured to, based on the time-in-use data, determine whether the first software version satisfies a time-in-use threshold for a first software distribution channel. The time-in-use threshold is associated with the software defect risk tolerance level of the first software distribution channel. For example, for a rapid distribution channel, the high defect risk is tolerated, and thus, the time-in-use threshold may be set low compared to other distribution channels.

According to block 508, the controller is configured to, in response to determining that the first software version satisfies the time-in-use threshold, promote the first software version to be eligible for the first software distribution channel. If the first software version satisfies a different time-in-use threshold for another software distribution channel, the controller is configured to promote the first software to be eligible for another software distribution channel.

The software rollout management process described herein offers robust control over software deployment by monitoring each version and determining whether it introduces significant changes that may carry a higher likelihood of undetected defects compared to patch versions. This enables the system to determine the safest timing for release, aligning the rollout of a software update with the specific risk tolerance associated with a given distribution channel, thereby ensuring that the potential risk remains within acceptable limits, even if multiple versions are released simultaneously.

In this specification, the phrase "configured to" is used in different contexts related to computer systems, hardware, or parts of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

Although the technology herein has been described with reference to particular examples, it is to be understood that these examples are merely illustrative of the principles and applications of the present technology. It is therefore to be understood that numerous modifications may be made and that other arrangements may be devised without departing from the spirit and scope of the present technology as defined by the appended claims.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system for managing software updates across a plurality of software distribution channels, the system comprising:
a processor; and
a memory communicatively coupled to the processor, the memory storing instructions executable by the processor to perform operations comprising:
identifying a software version for distribution across a first software distribution channel of a plurality of software distribution channels, wherein each software distribution channel is associated with a software defect risk tolerance level;
obtaining time-in-use data for the software version, wherein the time-in-use data comprises at least one of data indicative of an aggregate time the software version has been used across a plurality of software users or data indicative of a number of calendar days since the software version was released;
based on the time-in-use data, determining whether the software version satisfies a time-in-use threshold for a first software distribution channel, the time-in-use threshold associated with the software defect risk tolerance level of the first software distribution channel; and
in response to determining that the software version satisfies the time-in-use threshold, promoting the software version to be eligible for the first software distribution channel.

2. The system of claim 1, the operations further comprising:
after determining whether the software version satisfies the time-in-use threshold for the first software distribution channel, determining whether the software version satisfies a time-in-use threshold for a second software distribution channel different from the first software distribution channel.

3. The system of claim 2, the operations further comprising:
in response to determining that the software version satisfies the time-in-use threshold associated with the first software distribution channel, determining whether the time-in-use data for the software version satisfies a time-in-use threshold associated with the second software distribution channel, preferably the operations further comprising:
in response to determining that the time-in-use data for the software version satisfies the time-in-use threshold associated with the second software distribution channel, promoting the software version to be eligible for the second software distribution channel.

4. The system of one of claims 1 to 3,
wherein the time-in-use threshold comprises a threshold for the number of calendar days since the software version was released, or
wherein the time-in-use threshold comprises a threshold for the aggregate time the software version has been used across the plurality of software users.

5. The system of one of claims 1 to 4, the operations further comprising:
identifying one or more detected defects associated with the software version; and
determining whether the software version is eligible for promotion to the software distribution channel based on the one or more detected defects.

6. The system of one of claims 1 to 5,
wherein determining whether the software version satisfies the time-in-use threshold comprises comparing the time-in-use data to a plurality of time-in-use thresholds associated with different release stages within the first software distribution channel,
wherein, optionally, the time-in-use threshold for a first release stage is different from the time-in-use threshold for a second release stage within the first software distribution channel.

7. The system of one of claims 1 to 6,
wherein the software version is versioned according to a semantic versioning scheme comprising major versions, minor versions, and patch versions, and
wherein, optionally, determining whether the software version is eligible for promotion to the first software distribution channel comprises applying different time-in use thresholds based on whether the promotion is a patch version promotion within a minor version or a minor version promotion to a new minor version.

8. A method for managing software updates across a plurality of software distribution channels, the method comprising:
identifying, by one or more processors, a software version for distribution across a first software distribution channel of a plurality of software distribution channels, wherein each software distribution channel is associated with a software defect risk tolerance level;
obtaining, by the one or more processors, time-in-use data for the software version, wherein the time-in-use data comprises at least one of data indicative of an aggregate time the software version has been used across a plurality of software users and data indicative of a number of calendar days since the software version was released;
based on the time-in-use data, determining, by the one or more processors, whether the software version satisfies a time-in-use threshold for a first software distribution channel, the time-in-use threshold associated with the software defect risk tolerance level of the first software distribution channel; and
in response to determining that the software version satisfies the time-in-use threshold, promoting, by the one or more processors, the software version eligible for the first software distribution channel.

9. The method of claim 8, further comprising:
after determining whether the software version satisfies the time-in-use threshold for the first software distribution channel, determining, by the one or more processors, whether the software version satisfies a time-in-use threshold for a second software distribution channel different from the first software distribution channel.

10. The method of claim 9, further comprising:
in response to determining that the software version satisfies the time-in-use threshold associated with the first software distribution channel, determining, by the one or more processors, whether the time-in-use data for the software version satisfies a time-in-use threshold associated with the second software distribution channel,
wherein the method optionally further comprises:
in response to determining that the time-in-use data for the software version satisfies the time-in-use threshold associated with the second software distribution channel, promoting, by the one or more processors, the software version to be eligible for the second software distribution channel.

11. The method of one of claims 8 to 10,
wherein the time-in-use threshold comprises a threshold for the number of calendar days since the software version was released, or
wherein the time-in-use threshold comprises a threshold for the aggregate time the software version has been used across the plurality of software users.

12. The method of one of claims 8 to 11, further comprising:
identifying, by the one or more processors, one or more detected defects associated with the software version; and
determining whether the software version is eligible for promotion to the first software distribution channel based on the one or more defects detected.

13. The method of one of claims 8 to 12, wherein determining, by the one or more processors, whether the software version satisfies the time-in-use threshold comprises comparing, by the one or more processors, the time-in-use data to a plurality of time-in-use thresholds associated with different release stages within the first software distribution channel.

14. A non-transitory computer-readable medium comprising instructions that, when executed by one or more processors, cause the one or more processors to perform operations for managing software updates across a plurality of software distribution channels, the operations comprising:
identifying a software version for distribution across a first software distribution channel of a plurality of software distribution channels, wherein each software distribution channel is associated with a software defect risk tolerance level;
obtaining time-in-use data for the software version, wherein the time-in-use data comprises at least one of data indicative of an aggregate time the software version has been used across a plurality of software users and data indicative of a number of calendar days since the software version was released;
based on the time-in-use data, determining whether the software version satisfies a time-in-use threshold for a first software distribution channel, the time-in-use threshold associated with the software defect risk tolerance level of the first software distribution channel; and
in response to determining that the software version satisfies the time-in-use threshold, promoting the software version to be eligible for the first software distribution channel.

15. A computer program comprising instructions which, when the program is executed by a computer, cause the computer to carry out the method of one of claims 8 to 13.
